(19) Europäisches Patentamt
European Patent Office
Office européen des brevets

(11) **EP 4 451 760 A1**

(12) **EUROPEAN PATENT APPLICATION**
published in accordance with Art. 153(4) EPC

(43) Date of publication:
**23.10.2024 Bulletin 2024/43**

(21) Application number: **23745855.9**

(22) Date of filing: **06.01.2023**

(51) International Patent Classification (IPC):
***H04W 64/00*** (2009.01)

(52) Cooperative Patent Classification (CPC):
**G01S 5/02; H04W 4/80; H04W 12/041;**
**H04W 12/0431; H04W 64/00**

(86) International application number:
**PCT/CN2023/071023**

(87) International publication number:
**WO 2023/142970 (03.08.2023 Gazette 2023/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.01.2022 CN 202210102063**

(71) Applicant: **Huawei Technologies Co., Ltd.**
**Shenzhen, Guangdong 518129 (CN)**

(72) Inventors:
• **SUN, Li**
**Shenzhen, Guangdong 518129 (CN)**
• **LIU, Peng**
**Shenzhen, Guangdong 518129 (CN)**
• **YANG, Xun**
**Shenzhen, Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **METHOD AND APPARATUS FOR PERFORMING RANGING IN UWB, AND READABLE STORAGE MEDIUM**

(57) This application relates to a ranging positioning scenario in the field of wireless communication sensing, and in particular, to a ranging method in a UWB, an apparatus, and a readable storage medium; and is applied in a wireless local area network supporting the 802.15.4z standard. The method includes: Two communication parties (for example, a first device and a second device) extract key sequences based on wireless channel information (for example, channel state information) between respective narrowband communication modules (for example, Wi-Fi, Bluetooth, or Zigbee); then provide the key sequences to respective UWB modules; and perform ranging based on the key sequences. According to embodiments of this application, costs and overheads can be reduced while ranging security is ensured.

FIG. 4

**Description**

This application claims priority to Chinese Patent Application No. 202210102063.2, filed with the China National Intellectual Property Administration on January 27, 2022 and entitled "RANGING METHOD IN UWB, APPARATUS, AND READABLE STORAGE MEDIUM", which is incorporated herein by reference in its entirety.

**TECHNICAL FIELD**

This application relates to the field of wireless communication technologies, and in particular, to a ranging method in an ultra-wideband (ultra-wideband, UWB), an apparatus, and a readable storage medium.

**BACKGROUND**

With rapid development of mobile communication and Internet technologies, people's demands for position services are increasing. Ranging and positioning technologies are important technologies in the field of communication sensing, and are highly concerned by International Organization for Standardization (for example, institute of electrical and electronics engineers (institute of electrical and electronics engineers, IEEE)). For example, the IEEE 802.15.4z (also referred to as impulse radio (impulse radio, IR) ultra-wideband, namely, IR-UWB) standard aims to standardize a ranging communication process, and determine a position of a device through secure ranging and exchange of ranging results. Specifically, two communication parties learn of a distance between the two devices by sending a ranging sequence, to perform high-precision position estimation. This technology is widely needed and applied in the fields of personnel positioning in factories, goods positioning in logistics and warehousing, intelligent sensing of a vehicle door lock, and the like. While demands for positioning and ranging are increasing rapidly, a security problem also arises.

In the IEEE 802.15.4z standard, a manner of encrypting the ranging sequence is used to resolve the security problem occurs in the ranging and positioning process, and a 128-bit scrambled timestamp sequence (scrambled timestamp sequence, STS) is mainly used to perform advanced encryption standard (advanced encryption standard, AES) encryption on 128-bit data to generate the ranging sequence. The AES is a symmetric encryption mode. Therefore, a receiver and a transmitter need to perform key agreement in advance, in other words, negotiate to determine the 128-bit STS. In this case, the negotiation process consumes extra resources and may be intercepted by an attacker, causing information leakage. In addition, to ensure high security, a key (namely, the 128-bit STS) needs to be updated after a period of time, and frequent key update also causes a sharp increase in overheads and costs.

**SUMMARY**

Embodiments of this application provide a ranging method in a UWB, an apparatus, and a readable storage medium, to reduce costs and overheads while ensuring ranging security.

The following describes this application from different aspects. It should be understood that mutual reference may be made to the following implementations and beneficial effects of the different aspects.

The technical solutions of this application are mainly applied in a ranging positioning scenario in the field of wireless communication sensing. In this application, a first device includes at least a UWB module and a narrowband communication module, and a second device includes at least a UWB module and a narrowband communication module. The UWB module may be understood as an apparatus, a chip, or the like that implements a UWB wireless communication technology. Correspondingly, the narrowband communication module may be understood as an apparatus, a chip, or the like that implements a narrowband communication technology (for example, Wi-Fi, Bluetooth, or Zigbee (Zigbee protocol)). In a device (device), the UWB module and the narrowband communication module may be different apparatuses or chips. Certainly, the UWB module and the narrowband communication module may alternatively be integrated into one apparatus or chip. Implementations of the UWB module and the narrowband communication module in the device are not limited in this application.

According to a first aspect, this application provides a ranging method in a UWB. The method includes: A UWB module of a first device obtains a first key sequence from a narrowband communication module of the first device; and the UWB module of the first device sends a first ranging signal, where the first ranging signal is generated based on the first key sequence. The first key sequence is generated based on channel state information between the narrowband communication module of the first device and a narrowband communication module of a second device. In other words, the first key sequence is generated based on channel state information of a channel from the second device to the first device. The first ranging signal may be used to measure a distance between the first device and the second device.

Optionally, before that a UWB module of a first device obtains a first key sequence from a narrowband communication module of the first device, the method further includes: The narrowband communication module of the first device and the narrowband communication module of the second device perform channel estimation to obtain channel state information; and the narrowband communication module of the first device generates the first key sequence based on channel state information estimated by the narrowband communication module of the first device.

In this solution, the first device generates a key sequence based on wireless channel information (for example, the channel state information) between narrowband communication modules, and then generates and sends a ranging signal based on the key sequence, to perform ranging. Because wireless channel information (for example, the channel state information) between the first device and the second device is not learned by another device (a device other than the first device and the second device), the key sequence generated based on the wireless channel information (for example, the channel state information) is not learned by the another device, and this improves ranging security. In addition, in this solution, the first device and the second device do not need to perform key agreement. Therefore, this solution can further reduce costs and overheads.

With reference to the first aspect, in a possible implementation, the first key sequence includes a first key subsequence and a second key subsequence. A length of the first key subsequence is equal to a length of the second key subsequence. That the first ranging signal is generated based on the first key sequence includes: The first ranging signal is generated based on the first key subsequence in the first key sequence. In other words, the first key subsequence may be used to encrypt a to-be-sent ranging sequence in the first device, and the second key subsequence may be used to decrypt a ranging sequence received by the first device.

In this solution, the key sequence is divided into two parts of an equal length, one part is used for encryption, and the other part is used for decryption. In this way, even if the another device (the device other than the first device and the second device) receives the ranging signal sent by the first device, the other part of the key cannot be deduced based on the ranging sequence (which may be public) and the received ranging signal, and this further improves security.

Optionally, positions of the first key subsequence and the second key subsequence in the first key sequence may not overlap. In this way, the another device (the device other than the first device and the second device) cannot deduce a part of the second key subsequence based on the first key subsequence, to further improve security.

With reference to the first aspect, in a possible implementation, after that the UWB module of the first device sends a first ranging signal, the method further includes: The UWB module of the first device receives a second signal used for ranging, where the second signal used for ranging is obtained after a second ranging signal is transmitted through a wireless channel, and the second ranging signal is generated based on a fourth key subsequence in a second key sequence obtained by the second device; and the UWB module of the first device generates a third ranging signal based on the second key subsequence, and performs a correlation operation on the third ranging signal and the second signal used for ranging, to obtain a first timestamp, where the first timestamp is used to calculate the distance between the first device and the second device.

In this solution, when the second device sends a ranging signal, the first device performs a correlation operation on the received signal and a local ranging signal generated by the second key subsequence, to obtain time at which the ranging signal sent by the first device arrives at the second device, to support ranging.

With reference to the first aspect, in a possible implementation, both the narrowband communication modules of the first device and the second device use a multicarrier technology (for example, orthogonal frequency division multiplexing (orthogonal frequency division multiplexing, OFDM)) for communication. The channel state information is a complex sequence, a real part of the channel state information is used to generate the first key subsequence in the first key sequence, and an imaginary part of the channel state information is used to generate the second key subsequence in the first key sequence. The length of the first key subsequence is equal to the length of the second key subsequence.

With reference to the first aspect, in a possible implementation, both the narrowband communication modules of the first device and the second device perform communication by using a frequency hopping spread spectrum technology. The channel state information is a received signal strength indication (received signal strength indication, RSSI). The RSSI is a real number.

This solution provides two key generation modes to support key generation in different narrowband communication systems.

With reference to the first aspect, in a possible implementation, the first ranging signal is generated after a first ranging sequence is modulated, and the first ranging sequence is obtained after bit-wise XOR is performed on the first key subsequence in the first key sequence and an original ranging sequence. The original ranging sequence is a sequence determined by the first device and the second device through negotiation, or the original ranging sequence is a preset random sequence.

In this solution, a key sequence (for example, the first key sequence) extracted from the wireless channel is used to encrypt (for example, perform bit-wise XOR on) the original ranging sequence, and an AES encryption module does not need to be used, so that implementation complexity of a system can be reduced, and power consumption and costs can be reduced.

With reference to the first aspect, in a possible implementation, the first ranging signal is generated after a first ranging sequence is modulated, and the first ranging sequence is obtained after advanced encryption standard AES encryption is performed on an original ranging sequence by using the first key subsequence in the first key sequence.

A length of the first ranging sequence, the length of the first key subsequence, and a length of the original ranging sequence are equal. The original ranging sequence is a sequence determined by the first device and the second device through negotiation, or the original ranging sequence is a preset random sequence.

In this solution, AES encryption is performed on the original ranging sequence by using the key sequence (for example, the first key sequence) extracted from the wireless channel. This solution may be compatible with the solution in the 802.15.4z standard, and key agreement does not need to be performed, so that a risk of key leakage can be reduced, security can be improved, and additional overheads can be reduced (because there is no key agreement process).

With reference to the first aspect, in a possible implementation, the first ranging signal is generated after the first key subsequence in the first key sequence is modulated.

In this solution, the key sequence (for example, the first key subsequence) extracted from the wireless channel is directly used as a ranging sequence. Because the another device (the device other than the first device and the second device) cannot obtain the wireless channel information (for example, the channel state information) between the first device and the second device, the another device cannot deduce the key sequence, so that security is improved, and complexity can be reduced because an encryption operation is not required.

According to a second aspect, this application provides a ranging method in a UWB. The method includes: A UWB module of a second device obtains a second key sequence from a narrowband communication module of the second device; the UWB module of the second device receives a first signal used for ranging, where the first signal used for ranging is obtained after a first ranging signal is transmitted through a wireless channel, and the first ranging signal is generated based on a first key sequence obtained by the first device; and the UWB module of the second device generates a fourth ranging signal based on the second key sequence, and performs a correlation operation on the fourth ranging signal and the first signal used for ranging, to obtain a second timestamp. The second key sequence is generated based on channel state information between the narrowband communication module of the second device and a narrowband communication module of the first device. In other words, the second key sequence is generated based on channel state information of a channel from the first device to the second device. The second timestamp is used to calculate a distance between the first device and the second device.

Optionally, before that a UWB module of a second device obtains a second key sequence from a narrowband communication module of the second device, the method further includes: The narrowband communication module of the second device and the narrowband communication module of the first device perform channel estimation to obtain channel state information; and the narrowband communication module of the second device generates the second key sequence based on channel state information estimated by the narrowband communication module of the second device.

With reference to the second aspect, in a possible implementation, the second key sequence includes a third key subsequence and a fourth key subsequence, and a length of the third key subsequence is equal to a length of the fourth key subsequence. That the UWB module of the second device generates a fourth ranging signal based on the second key sequence includes: The UWB module of the second device generates the fourth ranging signal based on the third key subsequence in the second key sequence.

Optionally, positions of the third key subsequence and the fourth key subsequence in the second key sequence may not overlap.

With reference to the second aspect, in a possible implementation, after that the UWB module of the second device receives a first signal used for ranging, the method further includes: The UWB module of the second device sends a second ranging signal, where the second ranging signal is generated based on the fourth key subsequence in the second key sequence, and the second ranging signal is used to measure the distance between the first device and the second device.

With reference to the second aspect, in a possible implementation, both the narrowband communication modules of the first device and the second device use a multicarrier technology (for example, orthogonal frequency division multiplexing (orthogonal frequency division multiplexing, OFDM)) for communication. The channel state information is a complex sequence, a real part of the channel state information is used to generate the third key subsequence in the second key sequence, and an imaginary part of the channel state information is used to generate the fourth key subsequence in the second key sequence. The length of the third key subsequence is equal to the length of the fourth key subsequence.

With reference to the first aspect, in a possible implementation, both the narrowband communication modules of the first device and the second device perform communication by using a frequency hopping spread spectrum technology. The channel state information is a received signal strength indication (received signal strength indication, RSSI). The RSSI is a real number.

With reference to the second aspect, in a possible implementation, the second ranging signal is generated after a second ranging sequence is modulated, and the second ranging sequence is obtained after bit-wise XOR is performed on the fourth key subsequence in the second key sequence and an original ranging sequence. The original ranging sequence is a sequence determined by the first device and the second device through negotiation, or the original ranging sequence is a preset random sequence.

With reference to the second aspect, in a possible implementation, the second ranging signal is generated after a second ranging sequence is modulated, and the second ranging sequence is obtained after advanced encryption standard AES encryption is performed on an original ranging sequence by using the fourth key subsequence in the second key sequence. A length of the second ranging sequence, the length of the fourth key subsequence, and a length of the original ranging sequence are equal. The original ranging sequence is a sequence determined by the first device and the second device through negotiation, or the original ranging sequence is a preset random sequence.

With reference to the second aspect, in a possible implementation, the second ranging signal is generated after the fourth key subsequence in the second key sequence is modulated.

According to a third aspect, this application provides a communication apparatus. The communication apparatus may be a first device or a chip in a first device. The communication apparatus includes: a processing unit, configured to obtain a first key sequence, where the first key sequence is generated based on channel state information between a narrowband communication module of a first device and a narrowband communication module of a second device; and a transceiver unit, configured to send a first ranging signal, where the first ranging signal is generated based on the first key sequence, and the first ranging signal is used to measure a distance between the first device and the second device.

With reference to the third aspect, in a possible implementation, the first key sequence includes a first key subsequence and a second key subsequence, and a length of the first key subsequence is equal to a length of the second key subsequence. That the first ranging signal is generated based on the first key sequence includes: The first ranging signal is generated based on the first key subsequence in the first key sequence.

With reference to the third aspect, in a possible implementation, the transceiver unit is further configured to receive a second signal used for ranging, where the second signal used for ranging is obtained after a second ranging signal is transmitted through a wireless channel, and the second ranging signal is generated based on a fourth key subsequence in a second key sequence obtained by the second device.

The processing unit is further configured to: generate a third ranging signal based on the second key subsequence, and perform a correlation operation on the third ranging signal and the second signal used for ranging, to obtain a first timestamp, where the first timestamp is used to calculate the distance between the first device and the second device.

With reference to the third aspect, in a possible implementation, the channel state information is a complex sequence, a real part of the channel state information is used to generate the first key subsequence in the first key sequence, and an imaginary part of the channel state information is used to generate the second key subsequence in the first key sequence. The length of the first key subsequence is equal to the length of the second key subsequence.

With reference to the third aspect, in a possible implementation, that the first ranging signal is generated based on the first key sequence includes: The first ranging signal is generated after a first ranging sequence is modulated, and the first ranging sequence is obtained after bit-wise XOR is performed on the first key subsequence in the first key sequence and an original ranging sequence; or the first ranging signal is generated after a first ranging sequence is modulated, the first ranging sequence is obtained after advanced encryption standard AES encryption is performed on an original ranging sequence by using the first key subsequence in the first key sequence, and a length of the first ranging sequence, the length of the first key subsequence, and a length of the original ranging sequence are equal; or the first ranging signal is generated after the first key subsequence in the first key sequence is modulated. The original ranging sequence is a sequence determined by the first device and the second device through negotiation, or the original ranging sequence is a preset random sequence.

According to a fourth aspect, this application provides a communication apparatus. The communication apparatus may be a second device or a chip in a second device. The communication apparatus includes: an obtaining unit, configured to obtain a second key sequence, where the second key sequence is generated based on channel state information between a narrowband communication module of the second device and a narrowband communication module of a first device; a transceiver unit, configured to receive a first signal used for ranging, where the first signal used for ranging is obtained after a first ranging signal is transmitted through a wireless channel, and the first ranging signal is generated based on a first key sequence obtained by the first device; a generation unit, configured to generate a fourth ranging signal based on the second key sequence; and a correlation operation unit, configured to perform a correlation operation on the fourth ranging signal and the first signal used for ranging, to obtain a second timestamp, where the second timestamp is used to calculate a distance between the first device and the second device.

With reference to the fourth aspect, in a possible implementation, the second key sequence includes a third key subsequence and a fourth key subsequence, and a length of the third key subsequence is equal to a length of the fourth key subsequence. The generation unit is specifically configured to generate a fourth ranging sending signal based on the third key subsequence in the second key sequence.

With reference to the fourth aspect, in a possible implementation, the transceiver unit is further configured to send a second ranging signal, where the second ranging signal is generated based on the fourth key subsequence in the second key sequence, and the second ranging signal is used to measure the distance between the first device and the second device.

With reference to the fourth aspect, in a possible implementation, the channel state information is a complex sequence, a real part of the channel state information is used to generate the third key subsequence in the second key sequence, and an imaginary part of the channel state information is used to generate the fourth key subsequence in the second key sequence. The length of the third key subsequence is equal to the length of the fourth key subsequence.

With reference to the fourth aspect, in a possible implementation, that the second ranging signal is generated based on the second key sequence includes: The second ranging signal is generated after a second ranging sequence is modulated, and the second ranging sequence is obtained after bit-wise XOR is performed on the fourth key subsequence in the second key sequence and an original ranging sequence; or the second ranging signal is generated after a second ranging sequence is modulated, the second ranging sequence is obtained after advanced encryption standard AES encryption is performed on an original ranging sequence by using the fourth key subsequence in the second key sequence, and a length of the second ranging sequence, the length of the fourth key subsequence, and a length of the original ranging sequence are equal; or the second ranging signal is generated after the fourth key subsequence in the second key sequence is modulated. The original ranging sequence is a sequence determined by the first device and the second device through negotiation, or the original ranging sequence is a preset random sequence.

According to a fifth aspect, this application provides a communication apparatus. The communication apparatus may be a first device or a chip in a first device, and the communication apparatus includes a processor and a transceiver. The processor is configured to obtain a first key sequence, where the first key sequence is generated based on channel state information between a narrowband communication module of a first device and a narrowband communication module of a second device; and the transceiver is configured to send a first ranging signal, where the first ranging signal is generated based on the first key sequence, and the first ranging signal is used to measure a distance between the first device and the second device.

Optionally, the communication apparatus further includes a memory. The memory is configured to store a computer program, and the computer program includes program instructions.

According to a sixth aspect, this application provides a communication apparatus. The communication apparatus may be a second device or a chip in a second device, and the communication apparatus includes a processor and a transceiver. The processor is configured to obtain a second key sequence, where the second key sequence is generated based on channel state information between a narrowband communication module of the second device and a narrowband communication module of a first device; the transceiver is configured to receive a first signal used for ranging, where the first signal used for ranging is obtained after a first ranging signal is transmitted through a wireless channel, and the first ranging signal is generated based on a first key sequence obtained by the first device; and the processor is configured to generate a fourth ranging signal based on the second key sequence, and perform a correlation operation on the fourth ranging signal and the first signal used for ranging to obtain a second timestamp, where the second timestamp is used to calculate a distance between the first device and the second device.

Optionally, the communication apparatus further includes a memory. The memory is configured to store a computer program, and the computer program includes program instructions.

According to a seventh aspect, an embodiment of this application provides a communication apparatus. The communication apparatus is implemented in a product form of a chip, and includes a processor and an interface circuit. The interface circuit is configured to receive a code instruction and transmit the code instruction to the processor. The processor is configured to run the code instruction to perform the ranging method in the UWB according to any one of the first aspect or the possible implementations of the first aspect. Optionally, the communication apparatus further includes a memory, and the memory is connected to the processor through a circuit.

Optionally, the processor and the memory may be physically mutually independent units, or the memory may be integrated with the processor.

According to an eighth aspect, an embodiment of this application provides a communication apparatus. The communication apparatus is implemented in a product form of a chip, and includes a processor and an interface circuit. The interface circuit is configured to receive a code instruction and transmit the code instruction to the processor. The processor is configured to run the code instruction to perform the ranging method in the UWB according to any one of the second aspect or the possible implementations of the second aspect. Optionally, the communication apparatus further includes a memory, and the memory is connected to the processor through a circuit.

Optionally, the processor and the memory may be physically mutually independent units, or the memory may be integrated with the processor.

According to a ninth aspect, an embodiment of this application provides a computer-readable storage medium. The computer-readable storage medium stores a computer program, the computer program includes program instructions, and when the program instructions run on a computer, the computer is enabled to perform the ranging method in the UWB according to the first aspect or the second aspect.

According to a tenth aspect, an embodiment of this application provides a computer program product. When the computer program product runs on a computer, the computer is enabled to perform the ranging method in the UWB according to the first aspect or the second aspect.

According to an eleventh aspect, an embodiment of this application provides a communication system. The communication system includes the first device described in the first aspect or the third aspect and the second device described in the second aspect or the fourth aspect.

By implementing embodiments of this application, costs and overheads can be reduced while ranging security is ensured.

**BRIEF DESCRIPTION OF DRAWINGS**

To describe technical solutions of embodiments of this application more clearly, the following briefly describes accompanying drawings for describing embodiments.

FIG. 1 is an architectural diagram of a ranging positioning system according to an embodiment of this application;
FIG. 2 is a diagram of a ranging principle according to an embodiment of this application;
FIG. 3 is a diagram of encrypting a ranging sequence according to an embodiment of this application;
FIG. 4 is a flowchart of a ranging method in a UWB according to an embodiment of this application;
FIG. 5 is a diagram of narrowband-assisted UWB secure ranging according to an embodiment of this application;
FIG. 6 is a diagram of a structure of a communication apparatus 1 according to an embodiment of this application;
FIG. 7 is a diagram of a structure of a communication apparatus 2 according to an embodiment of this application; and
FIG. 8 is a diagram of a structure of a communication apparatus 1000 according to an embodiment of this application.

**DESCRIPTION OF EMBODIMENTS**

The following clearly and completely describes the technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

In descriptions of this application, the words such as "first", "second", and the like are merely used to distinguish between different objects, and do not limit quantities and execution sequences. In addition, the words such as "first", "second", and the like are not necessarily different. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It may be understood that in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) A only, and B may also be determined (or generated) according to (or based on) A and/or other information.

The following briefly describes a system architecture of this application. It should be understood that the system architecture described in this application is intended to describe the technical solutions in embodiments of this application more clearly, and do not constitute any limitation on the technical solutions provided in embodiments of this application.

The technical solutions provided in this application may be applied in a ranging positioning scenario in the field of wireless communication sensing. In the ranging positioning scenario, two communication parties may perform authentication and negotiation according to a related protocol to establish a wireless communication connection. After the wireless communication connection is established, a transmit end sends a radio ranging frame to a receive end, and the receive end calculates arrival time after receiving the radio ranging frame, and returns another ranging radio frame to the transmit end. A distance between the two (namely, the transmit end and the receive end) is calculated by calculating round-trip time of a message to complete a ranging process.

In embodiments of this application, the term "communication" may also be described as "data transmission", "information transmission", or "transmission". The term "transmission" may generally refer to sending and receiving.

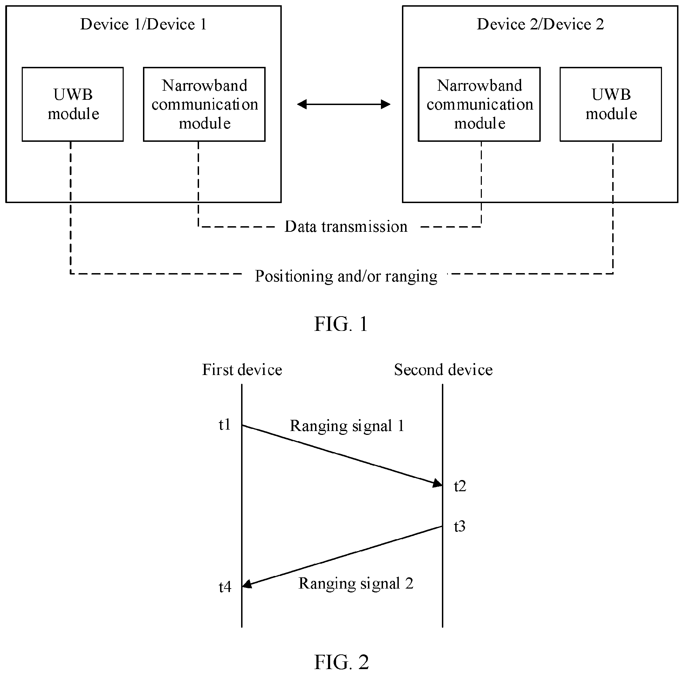

FIG. 1 is an architectural diagram of a ranging positioning system according to an embodiment of this application. As shown in FIG. 1, the ranging positioning system includes a plurality of devices (for example, a device 1 and a device 2 in FIG. 1), and each device includes at least a UWB module and a narrowband communication module. Positioning and/or ranging may be performed between UWB modules of the device 1 and the device 2, and data transmission may be performed between narrowband communication modules of the device 1 and the device 2 through a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (for example, Wi-Fi, Bluetooth, or Zigbee (Zigbee protocol)). In a device (device), the UWB module and the narrowband communication module may be different apparatuses or chips. Certainly, the UWB module and the narrowband communication module may alternatively be integrated into one apparatus or chip. Implementations of the UWB module and the narrowband communication module in the device are not limited in this embodiment of this application.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that supports UWB and narrowband communication functions (including but not limited to Wi-Fi, Bluetooth, and Zigbee). The user terminal may include various handheld devices, vehicle-mounted devices, wearable devices, Internet of things (Internet of things, IoT) devices, or computing devices that have a wireless communication function, or another processing device connected to a wireless modem, user equipment (user equipment, UE) of various forms, a mobile station (mobile station, MS), a terminal (terminal), a terminal device (terminal device), a portable communication device, a handheld device, a portable computing device, an entertainment device, a game device or system, a global positioning system device, any other proper device configured to perform network communication via a wireless medium, and the like. In addition, the device may support 802.15.4ab standard or a next generation of the 802.15.4ab standard. The device may also support a plurality of standards such as 802.15.4a, 802.15.4-2011, 802.15.4-2015, 802.15.4-2020, and 802.15.4z. The device may also support a plurality of wireless local area network (wireless local area network, WLAN) standards of the 802.11 family such as 802.11ax, 802.11ac, 802.11n, 802.11g, 802.11b, 802.11a, and a next generation of 802.11be.

The foregoing briefly describes the system architecture in this embodiment of this application. To better understand the technical solutions of this application, the following briefly describes some related content, terms, or nouns in this application.

1. Ultra-wideband (ultra-wideband, UWB)

An ultra-wideband (UWB) technology is a new wireless communication technology, and modulates impulse pulses with very steep rise and fall time to enable a signal to have a bandwidth of a gigahertz (GHz) magnitude. A bandwidth used by the UWB is generally greater than 1 GHz. Because a UWB system does not need to generate a sinusoidal carrier signal, and can directly transmit an impulse sequence, the UWB system has a very wide spectrum and very low average power, which is conducive to coexistence with other systems, to improve spectrum utilization and system capacity. In addition, in a short-distance communication application, transmit power of an ultra-wideband (UWB) transmitter may generally be lower than 1 mW (milliwatt). Theoretically, interference generated by an ultra-wideband (UWB) signal is only equivalent to one-wideband white noise. This facilitates good coexistence of an ultra-wideband and existing narrowband communication. Therefore, the UWB system and a narrowband (narrowband, NB) communication system can operate at the same time and do not interfere with each other.

2. Basic principle of ranging

The basic principle of ranging is as follows: Two communication parties calculate a distance between the two parties by measuring round-trip time of a message. A ranging sequence sent by a transmit end arrives at a receive end after pulse shaping and modulation are performed. The receive end performs a correlation operation on the received ranging sequence and a locally stored sequence, and obtains arrival time (namely, t2 and t4) based on a position of a peak of a correlation result. FIG. 2 is a diagram of a ranging principle according to an embodiment of this application.

As shown in FIG. 2, a first device sends a ranging signal 1 at a moment 11, and the ranging signal 1 arrives at a second device at a moment t2 after being transmitted through a wireless channel. After processing the received ranging signal, the second device sends a ranging signal 2 to the first device at a moment t3, and the ranging signal 2 arrives at the first device at a moment t4 after being transmitted through the wireless channel. The ranging signal is obtained after pulse shaping and modulation, for example, pulse position modulation (pulse position modulation, PPM) and pulse amplitude modulation (pulse amplitude modulation, PAM), are performed on a ranging sequence. A distance d between the first device and the second device may be calculated according to the following formulas (1-1) and (1-2):

$$d = \frac{t_{RTT}}{2} \times c \tag{1-1}$$

$$t_{RTT} = (t4 - t1) - (t3 - t2) \tag{1-2}$$

Herein, c represents a speed of light, and $t_{RTT}$ represents round-trip time of a ranging signal (or message).

It should be understood that, when a signal is transmitted on the wireless channel, the signal is reflected, diffracted, scattered, and the like by various obstacles, and is further affected by various noises. Consequently, when a signal sent by the transmit end arrives at the receive end, a waveform of the signal changes, but information or content carried by the signal does not change.

3. Early detect/Late commit (early detect/late commit, ED/LC)

The ED/LC (early detect/late commit) is a common attack manner for the ranging process (for example, the ranging process shown in FIG. 2). In this attack manner, an attacker deduces a complete ranging signal in advance based on a received ranging signal segment by using predictability of a ranging signal structure, and sends the complete ranging signal to the receiver, so that the receiver incorrectly estimates arrival time of the signal. FIG. 2 is used as an example. It is assumed that the attacker is located near the first device. In this case, the attacker may first receive the ranging signal sent by the first device before the second device. Because a format of the ranging signal is disclosed, the attacker can deduce the entire ranging signal by observing only a beginning part (or a header) of the received ranging signal, and then send the deduced entire ranging signal to the second device. The second device performs a correlation operation on the received signal and a locally stored reference signal to deduce arrival time of the signal, to obtain an estimated value of t2. However, because a ranging signal sent by the attacker arrives at the receiver of the second device earlier than the ranging signal sent by the first device (this is because the ranging signal is very long, and the attacker only needs to parse the beginning part of the ranging signal to deduce the entire ranging signal, and then sends the deduced entire ranging signal), a peak of a correlation result is advanced. In other words, the estimated value of t2 estimated by the second device is less than transmission time of the ranging signal between the first device and the second device, and this causes a smaller ranging result. Similarly, by attacking a process in which the second device sends the ranging signal, the attacker may make an estimated value of t4 estimated by the first device less than the transmission time of the ranging signal between the second device and the first device. Therefore, an ED/LC attack may cause a case in which an actual distance is very long, but the two ranging parties mistakenly consider the distance being very close. This may cause property loss in applications such as intelligent sensing of a vehicle door lock and position-based contactless payment. In other words, a security problem exists in the ranging process, or security in the ranging process cannot be ensured.

4. Secure ranging solution in IEEE 802.15.4z standard

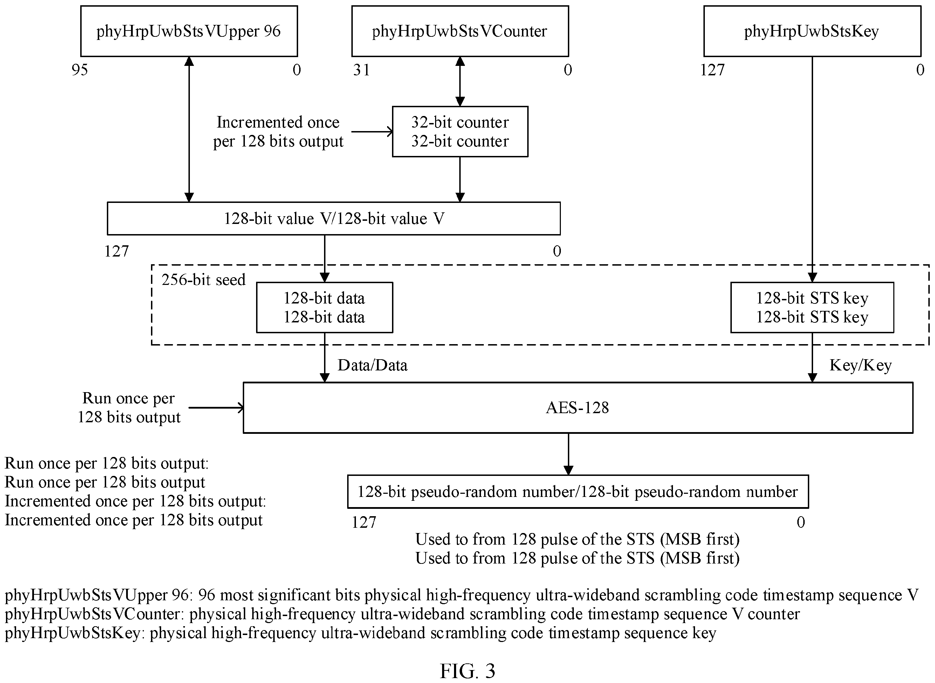

To resolve the security problem (like the ED/LC attack) in the ranging process, the IEEE 802.15.4z standard proposes a solution for encrypting a ranging sequence. FIG. 3 is a diagram of encrypting a ranging sequence according to an embodiment of this application. As shown in FIG. 3, a random bit sequence used for ranging includes two parts. A first part is 128-bit data (for example, 128-bit value V in FIG. 3), where the data includes 96 most significant bits phyHrpUwbStsVUpper 96 (physical high-frequency ultra-wideband scrambling code timestamp sequence V) and 32 least significant bits phyHrpUwbStsVCounter (physical high-frequency ultra-wideband scrambling code timestamp sequence V counter). A second part is a 128-bit key (for example, a 128-bit STS key in FIG. 3). A value of phyHrpUwbStsVUpper 96, a value of the STS key, and an initial value of the phyHrpUwbStsVCounter are determined through negotiation by both communication parties. Each time a random bit sequence is generated, a generator uses the 128-bit STS key (STS key) to encrypt the 128-bit value V (value V) by using an advanced encryption standard (advanced encryption standard, AES) to obtain a 128-bit random sequence. Pulse shaping and modulation are performed on the random sequence, and then the random sequence is sent. Because the ranging process is bidirectional, both the communication parties need to send ranging signals, and the ranging signals are obtained after pulse shaping and modulation (for example, PPM or PAM) are performed on a ranging sequence. Therefore, both the communication parties need to generate random bit sequences used for ranging. Therefore, after the random bit sequences are generated, counters of both the communication parties, namely, 32-bit phyHrpUwbStsVCounter, increase, to ensure that a random bit sequence generated next time is different from a random bit sequence generated last time.

It can be learned from analysis of the foregoing solution for encrypting a ranging sequence in FIG. 3 that the following problems exist: (1) A dedicated AES encryption module needs to be added in a system, an AES encryption algorithm needs to be executed each time the ranging sequence is sent, and a receive end needs to execute a corresponding AES decryption algorithm. This causes extra overheads, and increases implementation complexity and costs of the system. (2) The AES is a symmetric encryption method, and therefore, a receiver and a transmitter need to perform key agreement in advance, that is, negotiate to determine a value of phyHrpUwbStsVUpper 96, a value of an STS key, and an initial value of phyHrpUwbStsVCounter. Therefore, this agreement process causes extra resource consumption, and may be intercepted by an attacker, causing information leakage, and making the technical solution (namely, a solution for encrypting a ranging sequence proposed in the IEEE 802.15.4z standard) expire, that is, security in the ranging process is still not ensured. (3) To ensure high security of the system, a key (namely, the STS key) needs to be updated after a period of time, and frequent key update also causes a sharp increase in overheads and costs. (4) The AES algorithm can encrypt only a bit sequence of a fixed length. For example, a bit sequence length specified in the IEEE 802.15.4z standard is 128 bits, which means that a length of the ranging sequence also needs to adapt to this, that is, the length of the ranging sequence also needs to be 128 bits, and cannot be flexibly selected, and this limits flexibility of the ranging sequence.

Therefore, an embodiment of this application provides a ranging method in a UWB. Two communication parties (namely, a first device and a second device) extract key sequences based on wireless channel information (for example, channel state information) between respective narrowband communication modules (for example, Wi-Fi, Bluetooth, or Zigbee (a Zigbee protocol)), then provide the key sequences to respective UWB modules, and perform ranging based on the key sequences (for example, directly use the key sequence as the ranging sequence, or encrypt a locally generated random sequence by using the key sequence to generate a ranging sequence). This not only ensures ranging security, but also reduces costs and overheads.

The following describes in detail the technical solutions provided in this application with reference to more accompanying drawings.

In this application, unless otherwise specified, for same or similar parts of embodiments or implementations, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

Optionally, the first device and the second device in this application may be different electronic devices. For example, the first device is the device 1 in FIG. 1, and the second device is the device 2 in FIG. 1. The first device includes at least a UWB module and a narrowband communication module, and the second device also includes at least a UWB module and a narrowband communication module. In some embodiments, the first device and the second device may be located at different geographical positions, that is, a distance d between the first device and the second device may not be 0.

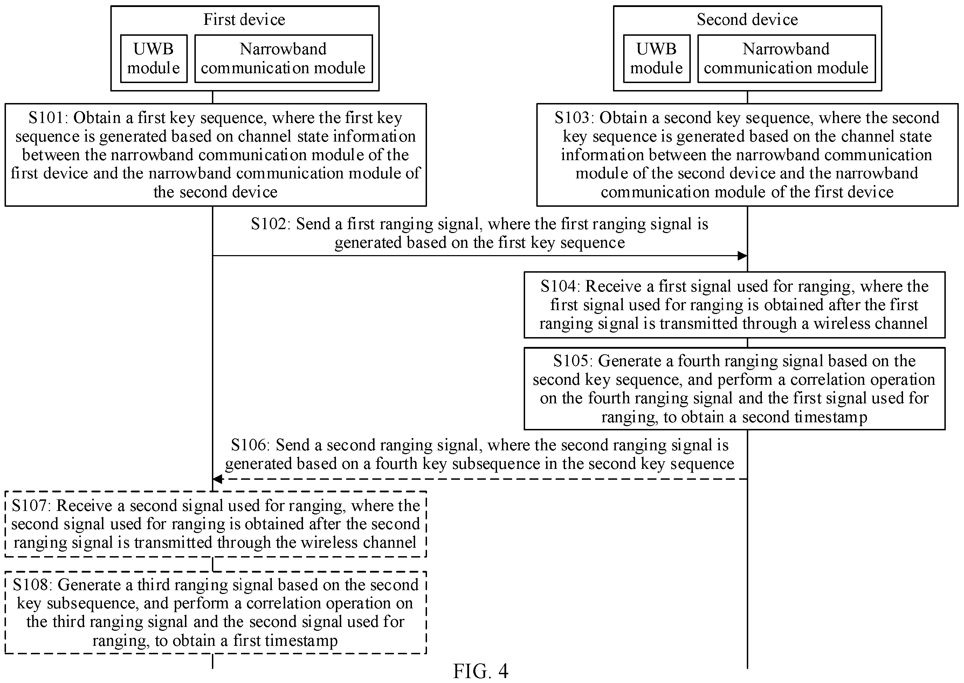

FIG. 4 is a flowchart of a ranging method in a UWB according to an embodiment of this application. Both a first device and a second device support the 802.15.4z standard, and further support a narrowband communication standard like a Wi-Fi standard (namely, 802.11 series standards), a Bluetooth standard, or Zigbee. As shown in FIG. 4, the ranging method in the UWB includes but is not limited to the following steps.

S101: A UWB module of the first device obtains a first key sequence from a narrowband communication module of the first device, where the first key sequence is generated based on channel state information between the narrowband communication module of the first device and a narrowband communication module of the second device.

Optionally, the narrowband communication module of the first device and the narrowband communication module of the second device may perform channel estimation to obtain channel state information (channel state information, CSI). The narrowband communication module of the first device may generate a binary key bit sequence (namely, the first key sequence) through quantization based on channel state information estimated by the narrowband communication module of the first device. The narrowband communication module of the first device may transmit the generated first key sequence to the UWB module of the first device, or the UWB module of the first device directly obtains the first key sequence from the narrowband communication module of the first device. The first key sequence may include two key subsequences: a first key subsequence (denoted as K1 for ease of description) and a second key subsequence (denoted as K2 for ease of description). A length of the first key subsequence (K1) is equal to a length of the second key subsequence (K2). The first key subsequence (K1) may be used to encrypt a to-be-sent ranging sequence in the first device, and the second key subsequence (K2) may be used to decrypt a ranging sequence received by the first device.

Optionally, positions of the first key subsequence (K1) and the second key subsequence (K2) in the first key sequence may not overlap. In this way, another device (a device other than the first device and the second device, which may be an interference device or an attacker herein) cannot deduce a part of the second key subsequence based on the first key subsequence either. This improves security.

Optionally, a manner in which the narrowband communication module of the first device and the narrowband communication module of the second device perform channel estimation to obtain the channel state information includes but is not limited to the following two manners.

In an implementation, for a case in which both the narrowband communication modules of the first device and the second device use a multicarrier technology (for example, orthogonal frequency division multiplexing (orthogonal frequency division multiplexing, OFDM)) for communication, or a system including the first device and the second device is a multicarrier system (for example, a Wi-Fi system using a multicarrier technology OFDM), the first device and the second device may obtain the channel state information by using the following method: The first device may insert pilot information into each subcarrier, and the second device estimates CSI on a corresponding subcarrier based on a received pilot. It should be understood that the CSI estimated by the second device is CSI of a channel from the first device to the second device. Alternatively, the second device may insert pilot information into each subcarrier, and the first device estimates CSI on a corresponding subcarrier based on a received pilot. It should be understood that the CSI estimated by the first device is CSI of the channel from the second device to the first device. There may be some differences between the CSI estimated by the first device and the CSI estimated by the second device. The differences may be caused by a channel change (because an interval between channel estimation performed by the first device and channel estimation performed by the second device is short, a difference caused by the channel change is very small), may be caused by different channel estimation algorithms of the first device and the second device, or may be caused by another reason. This embodiment of this application imposes no limitation on a reason for the difference. Certainly, the CSI estimated by the first device may alternatively be the same as the CSI estimated by the second device.

Because the CSI is a complex sequence, a real part and an imaginary part of the CSI may be separately used to generate a key sequence. For example, the first device and the second device may separately generate a key subsequence by using real parts of CSI estimated by the first device and the second device, and the first device and the second device may separately generate another key subsequence by using imaginary parts of CSI estimated by the first device and the second device.

In another implementation, for a case in which both the narrowband communication modules of the first device and the second device use a frequency hopping spread spectrum technology for communication, or a system including the first device and the second device is a frequency hopping system (for example, a Bluetooth system using a frequency hopping spread spectrum technology), the first device and the second device may obtain the channel state information by using a paging process of a Bluetooth protocol. The first device (referred to as a primary device in the Bluetooth system) sends a paging signal, and the second device estimates a received signal strength indication (received signal strength indication, RSSI) on a corresponding frequency based on the received paging signal. The second device (referred to as a secondary device in the Bluetooth system) sends a paging response signal, and the first device estimates an RSSI on a corresponding frequency based on the received paging response signal. There may be some differences between the RSSI estimated by the first device and the RSSI estimated by the second device. The differences may be caused by a channel change (because an interval between channel estimation performed by the first device and channel estimation performed by the second device is short, a difference caused by the channel change is very small), may be caused by different channel estimation algorithms of the first device and the second device, or may be caused by another reason. This embodiment of this application imposes no limitation on a reason for the difference. Certainly, the RSSI estimated by the first device may alternatively be the same as the RSSI estimated by the second device.

The RSSI is a real number. The first device and the second device may separately generate a key sequence by using the RSSIs estimated by the first device and the second device, and separately divide the key sequences generated by the first device and the second device into two parts of an equal length, to obtain two key subsequences respectively. Positions of the two key subsequences in the key sequence do not overlap.

Certainly, in addition to the foregoing two manners, there may be another manner in which the first device obtains the channel state information. This is not limited in this embodiment of this application.

Optionally, a manner in which the narrowband communication module of the first device generates the binary key bit sequence (namely, the first key sequence) based on the channel state information estimated by the narrowband communication module of the first device is as follows: The narrowband communication module of the first device may determine at least one threshold based on the obtained channel state information, and then may quantize the channel state information by using the at least one threshold, to obtain a first bit sequence. The narrowband communication module of the first device may determine the first key sequence based on the first bit sequence and a first effective position (herein, the first effective position is a position of an element that is not "null" in a bit sequence generated by the second device) sent by the second device. The first key sequence is a non-null value that is in the first bit sequence and that is located in the first effective position. The following uses an example to describe a manner of generating a key sequence.

For ease of description, the channel state information obtained through channel estimation is represented as an original channel vector $h_0$, and it is assumed that a quantity of elements of the original channel vector $h_0$ is N+2.

(1) An operation of removing a trend term is performed on the original channel vector $h_0$, to obtain a channel vector h of a length N. The operation of removing the trend term is as follows: For each $h_0[i]$, $h[i-1] = h_0[i] - (h_0[i-1] + h_0[i] + h_0[i+1])/3$ is calculated. A value range of i is greater than or equal to 2 and less than or equal to N+1 (that is, $2 \leq i \leq N+1$).

(2) A length L (in a unit of bit (bit)) of the key sequence is obtained, that is, a quantity of key bits finally obtained through quantization is L. The length L of the key sequence is preset, and may be equal to a length of a ranging sequence. Elements in the channel vector h are sorted in ascending order to obtain a sorted vector $h_s$, and $h_s[L/8]$, $h_s[L/4]$, $h_s[N-(L/4)+1]$, and $h_s[N-(L/8)+1]$ are selected as a threshold $T_1$, a threshold $T_2$, a threshold $T_3$, and a threshold $T_4$ respectively. If any one or more of L/8, L/4, N-(L/4)+1, and N-(L/8)+1 is not an integer, rounding is performed on a value that is not an integer (for example, rounding is performed by using a round off method, for example, 3.1 is rounded to 3, and 5.8 is rounded to 6).

It should be understood that the foregoing selected threshold is merely an example. An interval between the threshold $T_1$ and the threshold $T_2$ is equal to an interval between the threshold $T_3$ and the threshold $T_4$, and both are L/8. In an actual application, the interval between the threshold $T_1$ and the threshold $T_2$ (or the threshold $T_3$ and the threshold $T_4$) may be greater than L/8, for example, L/4 or 2/L; or may be less than L/8, for example, L/16. This is not limited in this embodiment of this application. In addition, in an actual application, a quantity of selected thresholds may also be flexibly set. This is not limited in this embodiment of this application.

(3) Each element in the channel vector h is quantized to obtain a bit sequence q (namely, the first bit sequence) of a length N. For example, the quantization manner is as follows: Elements in the channel vector h are compared with the foregoing selected thresholds. If an element in the channel vector h is less than or equal to the threshold $T_1$, the element is quantized into bits 00. If an element in the channel vector h is greater than the threshold $T_1$ and less than or equal to the threshold $T_2$, the element is quantized into bits 01. If an element in the channel vector h is greater than or equal to the threshold $T_3$ and less than the threshold $T_4$, the element is quantized to bits 10. If an element in the channel vector h is greater than or equal to the threshold $T_4$, the element is quantized to bits 11. If an element in the channel vector h is greater than the threshold $T_2$ and less than the threshold $T_3$, the element is not quantized, and is set to a null value (represented by a symbol $\phi$). For ease of understanding, the foregoing quantization manner may be described as follows:

$$q_i = \begin{cases} 00, \mathbf{h}_i \leq T_1 \\ 01, T_1 \prec \mathbf{h}_i \leq T_2 \\ 10, T_3 \leq \mathbf{h}_i \prec T_4 \; ; \; 1 \leq i \leq N \\ 11, \mathbf{h}_i \geq T_4 \\ \phi, T_2 \prec \mathbf{h}_i \prec T_3 \end{cases}$$

Herein, $h_i$ represents an $i^{th}$ element in the channel vector h, a value of i is greater than or equal to 1 and less than or equal to N (that is, $1 \leq i \leq N$), and $q_i$ represents an $i^{th}$ element in the bit sequence q obtained through quantization.

It should be understood that, in the foregoing quantization process, two bits are used to quantize an element in the channel vector h, which is merely an example. In an actual application, more than two bits, for example, three bits, four bits, or more bits, may be used to quantize an element in the channel vector h; or less than two bits, for example, one bit, may be used to quantize an element in the channel vector h. This is not limited in this embodiment of this application. In some implementations, a quantity of bits used in the quantization process may adapt to a quantity of thresholds. For example, there is only one threshold in (2), and one bit may be used for quantization in the quantization process. For another example, there are two thresholds in (2), and one bit or two bits may be used for quantization in the quantization process.

(4) The first device may send, to the second device, a position index that is not "null (or a symbol $\phi$)" in a generated bit sequence q. The second device checks a bit combination corresponding to the position index in the bit sequence generated by the second device. If the bit combination is not "null (or a symbol $\phi$)" either, the second device marks a corresponding position as an effective bit; otherwise, the second device marks the corresponding position as an ineffective bit. After the marking is completed, the second device sends position indexes of all effective bits to the first device. In a subsequent encryption/decryption process, the first device and the second device use bits at the effective positions in the bit sequences generated by the first device and the second device as respective key sequences.

It should be understood that, if the channel state information obtained by the first device through channel estimation is CSI on each subcarrier, because the CSI is the complex sequence, the original channel vector $h_0$ is the real part or the imaginary part of the CSI. When the original channel vector $h_0$ is the real part of the CSI, a sequence generated by using the generation method in this embodiment of this application may be the first key subsequence (K1). When the original channel vector $h_0$ is the imaginary part of the CSI, a sequence generated by using the generation method in this embodiment of this application may be the second key subsequence (K2). Certainly, alternatively, when the original channel vector $h_0$ is the real part of the CSI, a sequence generated by using the generation method in this embodiment of this application is the second key subsequence (K2). When the original channel vector $h_0$ is the imaginary part of the CSI, a sequence generated by using the generation method in this embodiment of this application may be the first key subsequence (K1). In other words, whether the first key subsequence is generated by the real part of the CSI or the imaginary part of the CSI (or whether the second key subsequence is generated by the imaginary part of the CSI or the real part of the CSI) is not limited in this embodiment of this application.

If the channel state information obtained by the first device through channel estimation is an RSSI on each frequency, the original channel vector $h_0$ is an RSSI (the RSSI is a real number), and a sequence generated by using the generation method in this embodiment of this application is the first key sequence. Then, the first device divides the first key sequence into two subsequences of an equal length, namely, the first key subsequence and the second key subsequence (positions of the first key subsequence and the second key subsequence in the first key sequence do not overlap). A manner in which the first device divides the first key sequence into the two subsequences of the equal length is not limited in this embodiment of this application. For example, the first device may use a first half sequence of the first key sequence as the first key subsequence, and use a second half sequence of the first key sequence as the second key subsequence; or on the contrary, use a second half sequence of the first key sequence as the first key subsequence, and use a first half sequence of the first key sequence as the second key subsequence. For example, the first device may use an element at an even-numbered position in the first key sequence as the first key subsequence, and use an element at an odd-numbered position in the first key sequence as the second key subsequence; or on the contrary, that is, use an element at an odd-numbered position in the first key sequence as the first key subsequence, and use an element at an even-numbered position in the first key sequence as the second key subsequence.

Optionally, if the CSI or the RSSI obtained based on the foregoing channel estimation is insufficient to generate a key sequence of a robust length to encrypt a ranging sequence, channel estimation may be performed for a plurality of times, to obtain robust CSI or RSSIs, to generate a key sequence of a robust length based on the robust CSI or RSSIs to encrypt the ranging sequence. In other words, the foregoing channel estimation process may be performed for a plurality of times, to obtain robust CSI or RSSIs, and generate the key sequence of the robust length by using the CSI or RSSIs, to encrypt the ranging sequence.

It may be understood that, because a narrowband communication system (like a Wi-Fi system, a Bluetooth system, or a Zigbee) needs to periodically perform channel estimation to support data transmission, in this embodiment of this application, periodic channel estimation of the narrowband communication system is used to generate and dynamically update a key sequence, and a UWB system does not need to perform a key generation and update operation, and this reduces overheads of the UWB system.

S 102: The UWB module of the first device sends a first ranging signal, where the first ranging signal is generated based on the first key sequence.

Optionally, after obtaining the first key sequence, the UWB module of the first device may generate the first ranging signal based on the first key sequence, and may send the first ranging signal. The first ranging signal may be used to measure a distance between the first device and the second device. Optionally, because the first key sequence includes the first key subsequence (K1) and the second key subsequence (K2), the UWB module of the first device may generate the first ranging signal based on the first key subsequence (K1) in the first key sequence.

In an implementation, the first device may obtain an original ranging sequence. The original ranging sequence may be a preset random sequence, a sequence determined by the first device and the second device through negotiation, a sequence defined in a standard, a disclosed sequence, or the like. This is not limited in this embodiment of this application. The first device may perform bit-wise XOR on the first key subsequence (K1) in the first key sequence and the original ranging sequence to obtain a first ranging sequence, and then perform pulse shaping and modulation on the first ranging sequence to generate the first ranging signal. A length of the first key subsequence is equal to a length of the original ranging sequence. Because a length of a key sequence generated based on wireless channel information (for example, channel state information) between the first device and the second device is flexible and adjustable, original ranging sequences of different lengths may be encrypted, that is, the original ranging sequence may be selected more flexibly, that is, flexibility of the ranging sequence is improved.

In this embodiment of this application, a key sequence (for example, the first key sequence) extracted from a wireless channel is used to encrypt (for example, perform bit-wise XOR on) the original ranging sequence, and an AES encryption module does not need to be used, so that implementation complexity of a system can be reduced, and power consumption and costs can be reduced.

In another implementation, the first device may obtain an original ranging sequence. The original ranging sequence may be a preset random sequence, a sequence determined by the first device and the second device through negotiation, a sequence defined in a standard, a disclosed sequence, or the like. This is not limited in this embodiment of this application. The first device may perform AES encryption on the original ranging sequence by using the first key subsequence (K1) in the first key sequence to obtain a first ranging sequence, and then may perform pulse shaping and modulation on the first ranging sequence to generate the first ranging signal. A length of the first ranging sequence, the length of the first key subsequence, and a length of the original ranging sequence are equal. For example, lengths of the first ranging sequence, the first key subsequence, and the original ranging sequence are all 128 bits. If a quantity of key bits generated through one channel estimation is less than 128 bits, the channel estimation may be performed for a plurality of times, to generate a 128-bit key. If a quantity of key bits generated through one channel estimation exceeds 128 bits, 128 bits may be selected from the generated key bits as the first key subsequence (namely, an STS key).

In this embodiment of this application, AES encryption is performed on the original ranging sequence by using a key sequence (for example, the first key sequence) extracted from a wireless channel. This solution may be compatible with a solution in the 802.15.4z standard, and key agreement does not need to be performed, so that a risk of key leakage can be reduced, security can be improved, and additional overheads can be reduced (because there is no key agreement process).

In still another implementation, the first device may directly perform pulse shaping and modulation on the first key subsequence (K1) in the first key sequence, to generate the first ranging signal.

In this embodiment of this application, a key sequence (for example, the first key subsequence) extracted from a wireless channel is directly used as the ranging sequence. Because another device (a device other than the first device and the second device) cannot obtain wireless channel information (for example, the channel state information) between the first device and the second device, the another device cannot deduce the key sequence, so that security is improved, and complexity can be reduced because an encryption operation is not required.

Optionally, before the first device generates the first ranging signal, the first device may negotiate with the second device to determine a generation manner of the ranging signal. For example, the first device may negotiate with the second device to determine which manner of the foregoing three implementations is used to generate the ranging signal, and then the first device generates the first ranging signal in the manner determined through negotiation.

S103: A UWB module of the second device obtains a second key sequence from the narrowband communication module of the second device, where the second key sequence is generated based on channel state information between the narrowband communication module of the second device and the narrowband communication module of the first device.

Optionally, the narrowband communication module of the second device and the narrowband communication module of the first device may perform channel estimation, to obtain the channel state information (CSI). For a manner in which the second device obtains the channel state information, refer to the foregoing corresponding description. Details are not described herein again. The narrowband communication module of the second device may generate a binary key bit sequence (namely, the second key sequence) through quantization based on channel state information estimated by the narrowband communication module of the second device. For a manner of generating the second key sequence, refer to the foregoing manner of generating the first key sequence. Details are not described herein again. The narrowband communication module of the second device may transmit the generated second key sequence to the UWB module of the second device, or the UWB module of the second device directly obtains the second key sequence from the narrowband communication module of the second device.

The second key sequence may include two key subsequences: a third key subsequence (denoted as K1' for ease of description) and a fourth key subsequence (denoted as K2' for ease of description). A length of the third key subsequence (K1') is equal to a length of the fourth key subsequence (K2'). The third key subsequence (K1') may be used to encrypt a to-be-sent ranging sequence in the second device, and the fourth key subsequence (K2') may be used to decrypt a ranging sequence received by the second device.

Optionally, positions of the third key subsequence (K1') and the fourth key subsequence (K2') in the second key sequence may not overlap. In this way, another device (a device other than the first device and the second device, which may be an interference device or an attacker herein) cannot deduce a part of the third key subsequence based on the fourth key subsequence. This improves security.

It should be understood that generation manners of the third key subsequence (K1') and the fourth key subsequence (K2') in the second key sequence are the same as generation manners of the first key subsequence (K1) and the second key subsequence (K2) in the first key sequence. For example, the first key subsequence (K1) is a first half sequence of the first key sequence, and the second key subsequence (K2) is a second half sequence of the first key sequence. In this case, the third key subsequence (K1') is a first half sequence of the second key sequence, and the fourth key subsequence (K2') is a second half sequence of the second key sequence. For another example, the first key subsequence (K1) is a bit at the even-numbered position in the first key sequence, and the second key subsequence (K2) is a bit at the odd-numbered position in the first key sequence. In this case, the third key subsequence (K1') is a bit at the even-numbered position in the second key sequence, and the fourth key subsequence (K2') is a bit at the odd-numbered position in the second key sequence. For still another example, the first key subsequence (K1) is generated by the real part of the CSI, and the second key subsequence (K2) is generated by the imaginary part of the CSI. In this case, the third key subsequence (K1') is generated by the real part of the CSI, and the fourth key subsequence (K2') is generated by the imaginary part of the CSI.

Optionally, an execution sequence between step S103 and step S 101 to step S 102 is not limited. For example, step S103 may be performed after step S101 to step S102, or step S103 may be performed before step S 101 to step S 102, or step S 103 may be performed simultaneously with step S101 to step S102.

S104: The UWB module of the second device receives a first signal used for ranging, where the first signal used for ranging is obtained after the first ranging signal is transmitted through the wireless channel.

Optionally, when a signal is transmitted on the wireless channel, the signal is reflected, diffracted, scattered, and the like by various obstacles, and is further affected by various noises. Consequently, when a signal sent by a transmit end arrives at a receive end, a waveform of the signal changes. In this embodiment of this application, a signal that is obtained when the first ranging signal sent by the first device reaches the second device after being transmitted through the wireless channel is referred to as the first signal used for ranging. The UWB module of the second device receives the first signal used for ranging.

S105: The UWB module of the second device generates a fourth ranging signal based on the second key sequence, and performs a correlation operation on the fourth ranging signal and the first signal used for ranging, to obtain a second timestamp.

Optionally, the second key sequence includes the third key subsequence (K1') and the fourth key subsequence (K2'). The UWB module of the second device may generate the fourth ranging signal based on the third key subsequence (K1') in the second key sequence. A manner of generating the fourth ranging signal is the same as a manner of generating the first ranging signal.

For example, the first ranging signal is obtained after bit-wise XOR is performed on the first key subsequence (K1) in the first key sequence and the original ranging sequence, and then pulse shaping and modulation are performed; and the fourth ranging signal is obtained after bit-wise XOR is performed on the third key subsequence (K1') in the second key sequence and the original ranging sequence, and then pulse shaping and modulation are performed. For another example, the first ranging signal is obtained after AES encryption is performed on the original ranging sequence by using the first key subsequence (K1) in the first key sequence, and then pulse shaping and modulation are performed; and the fourth ranging signal is obtained after AES encryption is performed on the original ranging sequence by using the third key subsequence (K1') in the second key sequence, and then pulse shaping and modulation are performed. For still another example, the first ranging signal is obtained after pulse shaping and modulation are performed on the first key subsequence (K1) in the first key sequence, and the fourth ranging signal is obtained after pulse shaping and modulation are performed on the third key subsequence (K1') in the second key sequence.

Optionally, after generating the fourth ranging signal, the UWB module of the second device may perform a correlation operation on the fourth ranging signal and the first signal used for ranging, to obtain the second timestamp (namely, time at which the first ranging signal arrives at the second device, denoted as t2). In other words, the second device performs a correlation operation by using a local ranging signal and the received signal, to obtain a timestamp. For specific implementation of the correlation operation, refer to the conventional technology. Details are not described in this embodiment of this application.

It should be understood that, in addition to a signal, an object of the correlation operation may alternatively be a ranging sequence or the like. The second device may perform an operation like demodulation and/or decoding on the first signal used for ranging, to obtain the ranging sequence. The second device may generate a ranging sequence based on the third key subsequence (K1') in the second key sequence, and then perform a correlation operation on a locally generated ranging sequence and a received ranging sequence (that is, the ranging sequence obtained after the operation like demodulation and/or decoding is performed on the first signal used for ranging), to obtain the second timestamp.

When the narrowband communication module of the first device and the narrowband communication module of the second device perform channel estimation, a difference between channel state information estimated by the first device and channel state information estimated by the second device is small (a possible difference is 0, that is, there is no difference). Therefore, a difference between the first key sequence generated by the first device based on the channel state information estimated by the first device and the second key sequence generated by the second device based on the channel state information estimated by the second device is very small (a possible difference is 0, that is, there is no difference) and the difference may be ignored. In this case, a difference between the fourth ranging signal generated by the second device by using the third key subsequence (K1') in the second key sequence and the first ranging signal sent by the first device is very small (a possible difference is 0, that is, there is no difference), and the difference may be ignored. In other words, the fourth ranging signal is approximately the same as the first ranging signal. Therefore, arrival time t2 at which the first ranging signal arrives at the second device may be obtained by performing a correlation operation on the fourth ranging signal and the first signal used for ranging.

Optionally, after obtaining the second timestamp, the UWB module of the second device may transmit the second timestamp to the narrowband communication module of the second device, and the narrowband communication module of the second device may send the second timestamp (t2) to the first device. Alternatively, the narrowband communication module of the second device may send a difference (namely, t3-t2) between sending time (denoted as t3) of the second ranging signal and the second timestamp (t2) to the second device. The first device may calculate the distance between the first device and the second device by using the second timestamp (t2) or the difference (t3-t2). A specific calculation manner is shown in the formula (1-1) and the formula (1-2). Details are not described herein again.

Optionally, after step S105, the ranging method in the UWB further includes the following steps.

S106: The UWB module of the second device sends the second ranging signal, where the second ranging signal is generated based on the fourth key subsequence in the second key sequence.

Optionally, the second key sequence includes the third key subsequence (K1') and the fourth key subsequence (K2'). The UWB module of the second device may generate the second ranging signal based on the fourth key subsequence (K2') in the second key sequence, and may send the second ranging signal. The second ranging signal may be used to measure the distance between the first device and the second device. For a manner of generating the second ranging signal, refer to the manner of generating the first ranging signal. Details are not described herein again. For example, the second ranging signal may be obtained after bit-wise XOR is performed on the fourth key subsequence (K2') in the second key sequence and the original ranging sequence, and then pulse shaping and modulation are performed. Alternatively, the second ranging signal may be obtained after the fourth key subsequence (K2') in the second key sequence performs AES encryption on the original ranging sequence, and then pulse shaping and modulation are performed. Alternatively, the second ranging signal may be obtained after the fourth key subsequence (K2') in the second key sequence directly performs pulse shaping and modulation. The original ranging sequence may be a preset random sequence, a sequence determined by the first device and the second device through negotiation, a sequence defined in a standard, a disclosed sequence, or the like. This is not limited in this embodiment of this application.

Optionally, before the second device generates the second ranging signal, the second device may negotiate with the first device to determine a manner of generating the second ranging signal, and the second device generates the second ranging signal in the generation manner determined through negotiation. For example, the manner of generating the second ranging signal may be the same as the manner of generating the first ranging signal. In other words, if the first ranging signal is obtained after bit-wise XOR is performed on the first key subsequence (K1) in the first key sequence and the original ranging sequence, and then pulse shaping and modulation are performed, the second ranging signal is obtained after bit-wise XOR is performed on the fourth key subsequence (K2') in the second key sequence and the original ranging sequence, and then pulse shaping and modulation are performed. If the first ranging signal is obtained after AES encryption is performed on the original ranging sequence by using the first key subsequence (K1) in the first key sequence, and then pulse shaping and modulation are performed, the second ranging signal is obtained after AES encryption is performed on the original ranging sequence by using the fourth key subsequence (K2') in the second key sequence, and then pulse shaping and modulation are performed. If the first ranging signal is obtained after pulse shaping and modulation are performed on the first key subsequence (K1) in the first key sequence, the second ranging signal is obtained after pulse shaping and modulation are performed on the fourth key subsequence (K2') in the second key sequence.

Certainly, the manner of generating the second ranging signal may be different from the manner of generating the first ranging signal.

S107: The UWB module of the first device receives a second signal used for ranging, where the second signal used for ranging is obtained after the second ranging signal is transmitted through the wireless channel.

S108: The UWB module of the first device generates a third ranging signal based on the second key subsequence, and performs a correlation operation on the third ranging signal and the second signal used for ranging, to obtain the first timestamp.

Optionally, the first key sequence includes the first key subsequence (K1) and the second key subsequence (K2). The UWB module of the first device may generate the third ranging signal based on the second key subsequence (K2) in the first key sequence. A manner of generating the third ranging signal is the same as the manner of generating the second ranging signal. After generating the third ranging signal, the UWB module of the first device may perform a correlation operation on the third ranging signal and the second signal used for ranging, to obtain the first timestamp (namely, time at which the second ranging signal arrives at the first device, denoted as t4). In other words, the first device performs a correlation operation by using a local ranging signal and the received signal, to obtain a timestamp. For specific implementation of the correlation operation, refer to the conventional technology. Details are not described in this embodiment of this application.

It should be understood that, in addition to a signal, an object of the correlation operation may alternatively be a ranging sequence or the like. The first device may perform an operation like demodulation and/or decoding on the second signal used for ranging, to obtain a ranging sequence. The first device may generate a ranging sequence based on the second key subsequence (K2) in the first key sequence, and then perform a correlation operation on a locally generated ranging sequence and a received ranging sequence (that is, the ranging sequence obtained after the operation like demodulation and/or decoding is performed on the second signal used for ranging), to obtain the first timestamp.

Optionally, after obtaining the first timestamp, the UWB module of the first device may transmit the first timestamp to the narrowband communication module of the first device, and the narrowband communication module of the first device may send the first timestamp to the second device. Alternatively, the narrowband communication module of the first device may send a difference (namely, t4-11) between the first timestamp (t4) and sending time (denoted as t1) of the first ranging signal to the second device. The second device may calculate the distance between the first device and the second device by using the first timestamp (t4) or the difference (t4-t1). A specific calculation manner is shown in the formula (1-1) and the formula (1-2). Details are not described herein again.

In this embodiment of this application, two communication parties (namely, the first device and the second device) extract a key sequence (that is, physical layer key generation) based on wireless channel information (for example, channel state information) between respective narrowband communication modules (such as Wi-Fi, Bluetooth, or Zigbee), provide the key sequence to respective UWB modules, and perform ranging based on the key sequence. This not only ensures ranging security, but also reduces costs and overheads.

To better understand the technical solutions provided in embodiments of this application, the following uses an example for description.

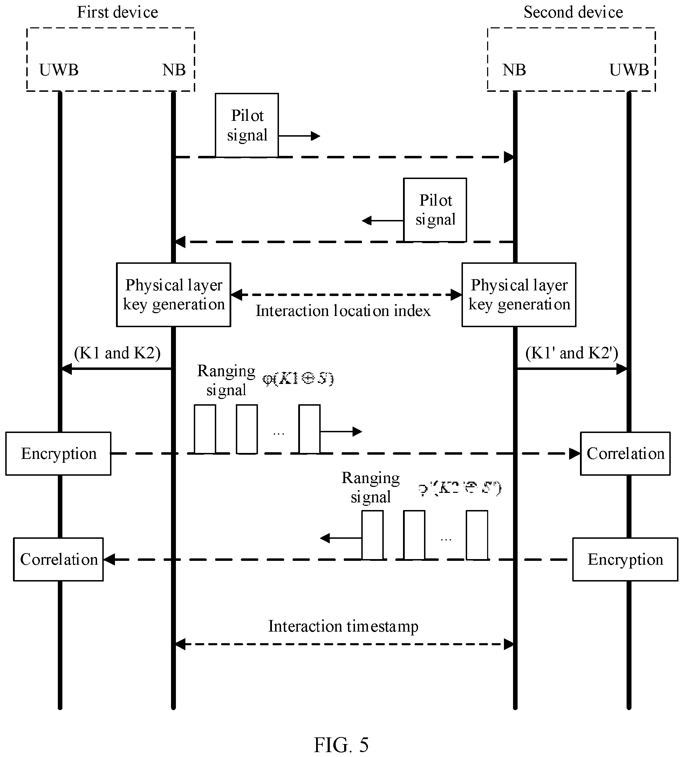

FIG. 5 is a diagram of narrowband-assisted UWB secure ranging according to an embodiment of this application. A first device includes a UWB module and a narrowband (NB) communication module, and a second device also includes a UWB module and a narrowband (NB) communication module. As shown in FIG. 5, the narrowband-assisted UWB secure ranging includes but is not limited to the following steps.

Step 1: Channel estimation. Narrowband communication modules of the first device and the second device separately send pilot signals to each other. After receiving the pilot signals sent by each other, the first device and the second device perform channel estimation to obtain channel state information. For a specific method for obtaining the channel state information, refer to corresponding descriptions in the foregoing step S101. Details are not described herein again.

Step 2: Physical layer key generation. The narrowband communication modules of the first device and the second device generate binary key bit sequences through quantization based on channel state information estimated by the narrowband communication modules of the first device and the second device. For a specific implementation of generating a physical layer key, refer to corresponding descriptions in step S101. Details are not described herein again. After the physical layer key is generated, the first device divides a locally generated key bit sequence into two segments K1 and K2 of an equal length, and the second device divides a locally generated key bit sequence into two segments K1' and K2' of an equal length. K1 is used by the first device to encrypt the ranging sequence of the first device, K1' is used by the second device to decrypt the ranging sequence after receiving the ranging sequence, K2' is used by the second device to encrypt the ranging sequence of the second device, and K2 is used by the first device to decrypt the ranging sequence after receiving the ranging sequence.

Step 3: Secure ranging. The narrowband communication module of the first device and the narrowband communication module of the second device separately send the key bit sequences generated by the narrowband communication module of the first device and the narrowband communication module of the second device to the UWB modules of the first device and the second device. The UWB modules generate a ranging sequence based on the key bit sequence (for a specific manner, refer to corresponding descriptions in the foregoing step S102, and details are not described herein again), and the ranging sequence is modulated to generate a ranging signal. The first device sends the ranging signal to the second device, and the second device performs a correlation operation on a local ranging signal and a received signal to obtain a timestamp. The second device sends the ranging signal to the first device, and the first device performs a correlation operation on a local ranging signal and a received signal to obtain a timestamp.

Step 4: Timestamp exchange. The narrowband communication modules of the first device and the second device exchange timestamps to complete a ranging process.

In this embodiment of this application, both communication parties separately generate a key sequence based on respective observation results of a wireless channel, to avoid key agreement, reduce a risk of key leakage, and reduce additional overheads. In addition, a length of a key generated through the wireless channel is flexible and adjustable, so that flexibility of a ranging sequence can be improved. In addition, in this embodiment of this application, a key sequence extracted from the wireless channel is directly used to perform ranging, to avoid using an AES encryption module, reduce system implementation complexity, and reduce power consumption and costs. A narrowband system needs to periodically perform channel estimation to support data transmission, and a key sequence can be generated and dynamically updated by using this process. Therefore, the UWB module in this embodiment of this application does not need to perform a key generation and update operation, to reduce overheads.

The foregoing content describes in detail the methods provided in this application. To facilitate implementation of the foregoing solutions in embodiments of this application, embodiments of this application further provide corresponding apparatuses or devices.

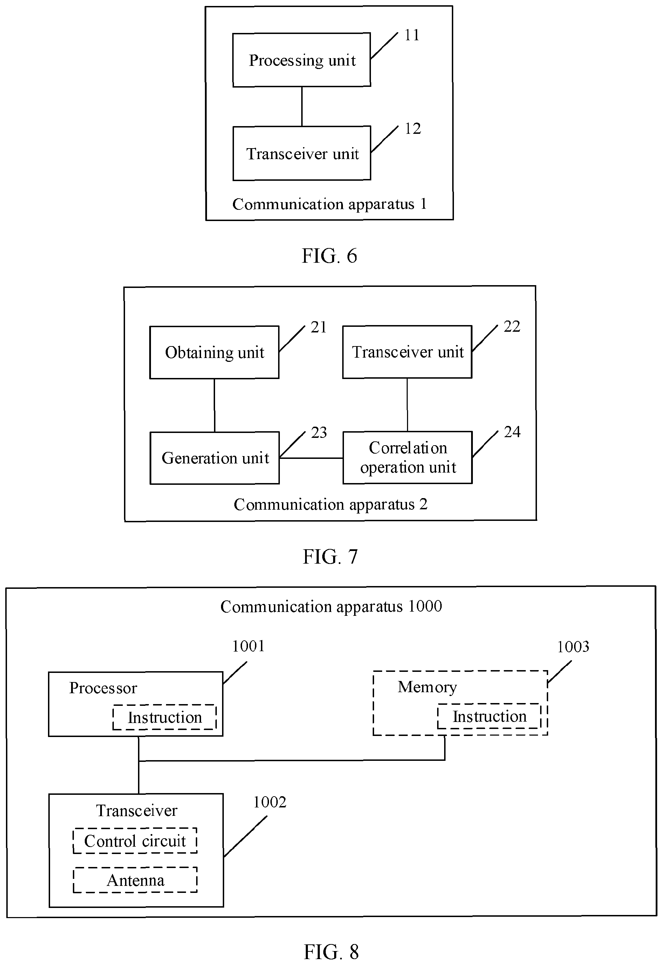

In embodiments of this application, the first device and the second device may be divided into functional modules (or functional units) based on the foregoing method examples. For example, each functional module (or functional unit) may be obtained through division based on each corresponding function, or two or more functions (or units) may be integrated into one processing module. The integrated module (or unit) may be implemented in a form of hardware, or may be implemented in a form of a software functional module. It should be noted that, in this embodiment of this application, the module (or unit) division is an example, and is merely logical function division. In actual implementation, another division manner may be used. A communication apparatus in an embodiment of this application is described below in detail with reference to FIG. 6 to FIG. 8. The communication apparatus is a first device or a second device. Further, the communication apparatus may be an apparatus in the first device; or the communication apparatus is an apparatus in the second device.

When an integrated unit is used, refer to FIG. 6. FIG. 6 is a diagram of a structure of a communication apparatus 1 according to an embodiment of this application. The communication apparatus 1 may be the first device or a chip in the first device, and may be specifically a UWB module of the first device or a chip in the first device. As shown in FIG. 6, the communication apparatus 1 includes a processing unit 11 and a transceiver unit 12.

The processing unit 11 is configured to obtain a first key sequence, where the first key sequence is generated based on channel state information between a narrowband communication module of a first device and a narrowband communication module of a second device; and the transceiver unit 12 is configured to send a first ranging signal, where the first ranging signal is generated based on the first key sequence, and the first ranging signal is used to measure a distance between the first device and the second device.

Optionally, the first key sequence includes a first key subsequence and a second key subsequence, and a length of the first key subsequence is equal to a length of the second key subsequence. That the first ranging signal is generated based on the first key sequence includes: The first ranging signal is generated based on the first key subsequence in the first key sequence.

Optionally, the transceiver unit 12 is further configured to receive a second signal used for ranging, where the second signal used for ranging is obtained after a second ranging signal is transmitted through a wireless channel, and the second ranging signal is generated based on a fourth key subsequence in a second key sequence obtained by the second device; and the processing unit 11 is further configured to generate a third ranging signal based on the second key subsequence, and perform a correlation operation on the third ranging signal and the second signal used for ranging, to obtain a first timestamp, where the first timestamp is used to calculate the distance between the first device and the second device.

Optionally, the channel state information is a complex sequence, a real part of the channel state information is used to generate the first key subsequence in the first key sequence, and an imaginary part of the channel state information is used to generate the second key subsequence in the first key sequence. The length of the first key subsequence is equal to the length of the second key subsequence.

Optionally, that the first ranging signal is generated based on the first key sequence includes: The first ranging signal is generated after a first ranging sequence is modulated, and the first ranging sequence is obtained after bit-wise XOR is performed on the first key subsequence in the first key sequence and an original ranging sequence. Alternatively, the first ranging signal is generated after a first ranging sequence is modulated, the first ranging sequence is obtained after advanced encryption standard AES encryption is performed on an original ranging sequence by using the first key subsequence in the first key sequence, and a length of the first ranging sequence, the length of the first key subsequence, and a length of the original ranging sequence are equal. Alternatively, the first ranging signal is generated after the first key subsequence in the first key sequence is modulated. The original ranging sequence is a sequence determined by the first device and the second device through negotiation, or the original ranging sequence is a preset random sequence.

It should be understood that the communication apparatus 1 may correspondingly perform the foregoing embodiment, and the foregoing operations or functions of the units in the communication apparatus 1 are separately intended to implement corresponding operations of the first device in the foregoing embodiment. For brevity, details are not described herein again.

FIG. 7 is a diagram of a structure of a communication apparatus 2 according to an embodiment of this application. The communication apparatus 2 may be a second device or a chip in a second device, and may be specifically a UWB module of the second device or a chip in the second device. As shown in FIG. 7, the communication apparatus 2 includes an obtaining unit 21, a transceiver unit 22, a generation unit 23, and a correlation operation unit 24.

The obtaining unit 21 is configured to obtain a second key sequence, where the second key sequence is generated based on channel state information between a narrowband communication module of the second device and a narrowband communication module of a first device. The transceiver unit 22 is configured to receive a first signal used for ranging, where the first signal used for ranging is obtained after a first ranging signal is transmitted through a wireless channel, and the first ranging signal is generated based on a first key sequence obtained by the first device. The generation unit 23 is configured to generate a fourth ranging signal based on the second key sequence. The correlation operation unit 24 is configured to perform a correlation operation on the fourth ranging signal and the first signal used for ranging to obtain a second timestamp. The second timestamp is used to calculate a distance between the first device and the second device.

Optionally, the second key sequence includes a third key subsequence and a fourth key subsequence, and a length of the third key subsequence is equal to a length of the fourth key subsequence. The generation unit 23 is specifically configured to generate a fourth ranging sending signal based on the third key subsequence in the second key sequence.

Optionally, the transceiver unit 22 is further configured to send a second ranging signal, where the second ranging signal is generated based on the fourth key subsequence in the second key sequence, and the second ranging signal is used to measure the distance between the first device and the second device.

Optionally, the channel state information is a complex sequence, a real part of the channel state information is used to generate the third key subsequence in the second key sequence, and an imaginary part of the channel state information is used to generate the fourth key subsequence in the second key sequence. The length of the third key subsequence is equal to the length of the fourth key subsequence.

Optionally, that the second ranging signal is generated based on the second key sequence includes: The second ranging signal is generated after a second ranging sequence is modulated, and the second ranging sequence is obtained after bit-wise XOR is performed on the fourth key subsequence in the second key sequence and an original ranging sequence. Alternatively, the second ranging signal is generated after a second ranging sequence is modulated, the second ranging sequence is obtained after advanced encryption standard AES encryption is performed on an original ranging sequence by using the fourth key subsequence in the second key sequence, and a length of the second ranging sequence, the length of the fourth key subsequence, and a length of the original ranging sequence are equal. Alternatively, the second ranging signal is generated after the fourth key subsequence in the second key sequence is modulated. The original ranging sequence is a sequence determined by the first device and the second device through negotiation, or the original ranging sequence is a preset random sequence.

The obtaining unit 21, the generation unit 23, and the correlation operation unit 24 may be integrated into one unit, for example, a processing unit.

It should be understood that the communication apparatus 2 may correspondingly perform the foregoing embodiment, and the foregoing operations or functions of the units in the communication apparatus 2 are separately intended to implement corresponding operations of the second device in the foregoing embodiment. For brevity, details are not described herein again.

The first device and the second device in embodiments of this application are described above. Possible product forms of the first device and the second device are described below. It should be understood that any form of product having the functions of the first device in FIG. 6 and the second device in FIG. 7 falls within the protection scope of embodiments of this application. It should be further understood that the following description is merely an example, and the product forms of the first device and the second device in embodiments of this application is not limited thereto.

In a possible product form, the first device and the second device in embodiments of this application may be implemented by using general bus architectures.

For ease of description, refer to FIG. 8. FIG. 8 is a diagram of a structure of a communication apparatus 1000 according to an embodiment of this application. The communication apparatus 1000 may be a first device, a second device, or a chip thereof. FIG. 8 shows only main components in a communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform the function of the first device in the foregoing embodiment. The processor 1001 may be configured to perform step S101 and step S108 in FIG. 4, and/or configured to perform another process of the technology described in this specification. The transceiver 1002 may be configured to perform step S102 and step S 107 in FIG. 4, and/or configured to perform another process of the technology described in this specification.

In another design, the communication apparatus 1000 may be configured to perform a function of the second device in the foregoing embodiment. The processor 1001 may be configured to perform step S103 and step S105 in FIG. 4, and/or configured to perform another process of the technology described in this specification. The transceiver 1002 may be configured to perform step S104 and step S 106 in FIG. 4, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (P-type metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 8. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device or the like.

In a possible product form, the first device and the second device in embodiments of this application may be implemented by general-purpose processors.

A general-purpose processor for implementing the first device includes a processing circuit and an input/output interface that is internally connected to and communicates with the processing circuit. The general-purpose processor may be configured to perform the function of the first device in the foregoing embodiment. Specifically, the processing circuit may be configured to perform step S 101 and step S 108 in FIG. 4, and/or another process of the technology described in this specification. The input/output interface may be configured to perform step S 102 and step S 107 in FIG. 4, and/or another process of the technology described in this specification.

A general-purpose processor for implementing the second device includes a processing circuit and an input/output interface that is internally connected to and communicates with the processing circuit. The general-purpose processor may be configured to perform the function of the second device in the foregoing embodiment. Specifically, the processing circuit may be configured to perform steps S103 and S 105 in FIG. 4, and/or another process of the technology described in this specification. The input/output interface may be configured to perform steps S 104 and S 106 in FIG. 4, and/or another process of the technology described in this specification.

It should be understood that the communication apparatuses in the foregoing product forms have any function of the first device or the second device in the foregoing embodiments. Details are not described herein.

An embodiment of this application further provides a computer-readable storage medium. The computer-readable storage medium stores computer program code. When the foregoing processor executes the computer program code, an electronic device performs the method in the foregoing embodiments.

An embodiment of this application further provides a computer program product. When the computer program product runs on a computer, the computer is enabled to perform the method in the foregoing embodiments.

An embodiment of this application further provides a communication apparatus. The apparatus may exist in a product form of a chip. A structure of the apparatus includes a processor and an interface circuit. The processor is configured to perform communication with another apparatus through the interface circuit, to enable the apparatus to perform the method in the foregoing embodiments.

An embodiment of this application further provides a wireless communication system, including a first device and a second device. The first device and the second device may perform the methods in the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A ranging method in an ultra-wideband, comprising:

    obtaining, by an ultra-wideband UWB module of a first device, a first key sequence from a narrowband communication module of the first device, wherein the first key sequence is generated based on channel state information between the narrowband communication module of the first device and a narrowband communication module of a second device; and

    sending, by the UWB module of the first device, a first ranging signal, wherein the first ranging signal is generated based on the first key sequence, and the first ranging signal is used to measure a distance between the first device and the second device.

2. The method according to claim 1, wherein the first key sequence comprises a first key subsequence and a second key subsequence, and a length of the first key subsequence is equal to a length of the second key subsequence; and that the first ranging signal is generated based on the first key sequence comprises: the first ranging signal is generated based on the first key subsequence in the first key sequence.

3. The method according to claim 2, wherein after the sending, by the UWB module of the first device, a first ranging signal, the method further comprises:

   receiving, by the UWB module of the first device, a second signal used for ranging, wherein the second signal used for ranging is obtained after a second ranging signal is transmitted through a wireless channel, and the second ranging signal is generated based on a fourth key subsequence in a second key sequence obtained by the second device; and
   generating, by the UWB module of the first device, a third ranging signal based on the second key subsequence, and performing a correlation operation on the third ranging signal and the second signal used for ranging, to obtain a first timestamp, wherein the first timestamp is used to calculate the distance between the first device and the second device.

4. The method according to any one of claims 1 to 3, wherein the channel state information is a complex sequence, a real part of the channel state information is used to generate the first key subsequence in the first key sequence, and an imaginary part of the channel state information is used to generate the second key subsequence in the first key sequence; and
   the length of the first key subsequence is equal to the length of the second key subsequence.

5. The method according to any one of claims 1 to 4, wherein that the first ranging signal is generated based on the first key sequence comprises:

   the first ranging signal is generated after a first ranging sequence is modulated, and the first ranging sequence is obtained after bit-wise XOR is performed on the first key subsequence in the first key sequence and an original ranging sequence; or
   the first ranging signal is generated after a first ranging sequence is modulated, the first ranging sequence is obtained after advanced encryption standard AES encryption is performed on an original ranging sequence by using the first key subsequence in the first key sequence, and a length of the first ranging sequence, the length of the first key subsequence, and a length of the original ranging sequence are equal; or
   the first ranging signal is generated after the first key subsequence in the first key sequence is modulated, wherein the original ranging sequence is a sequence determined by the first device and the second device through negotiation, or the original ranging sequence is a preset random sequence.

6. A ranging method in an ultra-wideband, comprising:

   obtaining, by an ultra-wideband UWB module of a second device, a second key sequence from a narrowband communication module of the second device, wherein the second key sequence is generated based on channel state information between the narrowband communication module of the second device and a narrowband communication module of a first device;
   receiving, by the UWB module of the second device, a first signal used for ranging, wherein the first signal used for ranging is obtained after a first ranging signal is transmitted through a wireless channel, and the first ranging signal is generated based on a first key sequence obtained by the first device; and
   generating, by the UWB module of the second device, a fourth ranging signal based on the second key sequence, and performing a correlation operation on the fourth ranging signal and the first signal used for ranging, to obtain a second timestamp, wherein the second timestamp is used to calculate a distance between the first device and the second device.

7. The method according to claim 6, wherein the second key sequence comprises a third key subsequence and a fourth key subsequence, and a length of the third key subsequence is equal to a length of the fourth key subsequence; and
   the generating, by the UWB module of the second device, a fourth ranging signal based on the second key sequence comprises:
   generating, by the UWB module of the second device, the fourth ranging signal based on the third key subsequence in the second key sequence.

8. The method according to claim 7, wherein after the receiving, by the UWB module of the second device, a first signal used for ranging, the method further comprises:
sending, by the UWB module of the second device, a second ranging signal, wherein the second ranging signal is generated based on the fourth key subsequence in the second key sequence, and the second ranging signal is used to measure the distance between the first device and the second device.

9. The method according to any one of claims 6 to 8, wherein the channel state information is a complex sequence, a real part of the channel state information is used to generate the third key subsequence in the second key sequence, and an imaginary part of the channel state information is used to generate the fourth key subsequence in the second key sequence; and
the length of the third key subsequence is equal to the length of the fourth key subsequence.

10. The method according to any one of claims 6 to 9, wherein that the second ranging signal is generated based on the second key sequence comprises:

the second ranging signal is generated after a second ranging sequence is modulated, and the second ranging sequence is obtained after bit-wise XOR is performed on the fourth key subsequence in the second key sequence and an original ranging sequence; or
the second ranging signal is generated after a second ranging sequence is modulated, the second ranging sequence is obtained after advanced encryption standard AES encryption is performed on an original ranging sequence by using the fourth key subsequence in the second key sequence, and a length of the second ranging sequence, the length of the fourth key subsequence, and a length of the original ranging sequence are equal; or
the second ranging signal is generated after the fourth key subsequence in the second key sequence is modulated, wherein
the original ranging sequence is a sequence determined by the first device and the second device through negotiation, or the original ranging sequence is a preset random sequence.

11. A communication apparatus, comprising:

a processing unit, configured to obtain a first key sequence, wherein the first key sequence is generated based on channel state information between a narrowband communication module of a first device and a narrowband communication module of a second device; and
a transceiver unit, configured to send a first ranging signal, wherein the first ranging signal is generated based on the first key sequence, and the first ranging signal is used to measure a distance between the first device and the second device.

12. The communication apparatus according to claim 11, wherein the first key sequence comprises a first key subsequence and a second key subsequence, and a length of the first key subsequence is equal to a length of the second key subsequence; and
that the first ranging signal is generated based on the first key sequence comprises: the first ranging signal is generated based on the first key subsequence in the first key sequence.

13. The communication apparatus according to claim 12, wherein the transceiver unit is further configured to receive a second signal used for ranging, wherein the second signal used for ranging is obtained after a second ranging signal is transmitted through a wireless channel, and the second ranging signal is generated based on a fourth key subsequence in a second key sequence obtained by the second device; and
the processing unit is further configured to: generate a third ranging signal based on the second key subsequence, and perform a correlation operation on the third ranging signal and the second signal used for ranging, to obtain a first timestamp, wherein the first timestamp is used to calculate the distance between the first device and the second device.

14. The communication apparatus according to any one of claims 11 to 13, wherein the channel state information is a complex sequence, a real part of the channel state information is used to generate the first key subsequence in the first key sequence, and an imaginary part of the channel state information is used to generate the second key subsequence in the first key sequence; and
the length of the first key subsequence is equal to the length of the second key subsequence.

15. The communication apparatus according to any one of claims 11 to 14, wherein that the first ranging signal is generated based on the first key sequence comprises:

the first ranging signal is generated after a first ranging sequence is modulated, and the first ranging sequence is obtained after bit-wise XOR is performed on the first key subsequence in the first key sequence and an original ranging sequence; or

the first ranging signal is generated after a first ranging sequence is modulated, the first ranging sequence is obtained after advanced encryption standard AES encryption is performed on an original ranging sequence by using the first key subsequence in the first key sequence, and a length of the first ranging sequence, the length of the first key subsequence, and a length of the original ranging sequence are equal; or

the first ranging signal is generated after the first key subsequence in the first key sequence is modulated, wherein the original ranging sequence is a sequence determined by the first device and the second device through negotiation, or the original ranging sequence is a preset random sequence.

16. A communication apparatus, comprising:

an obtaining unit, configured to obtain a second key sequence, wherein the second key sequence is generated based on channel state information between a narrowband communication module of a second device and a narrowband communication module of a first device;

a transceiver unit, configured to receive a first signal used for ranging, wherein the first signal used for ranging is obtained after a first ranging signal is transmitted through a wireless channel, and the first ranging signal is generated based on a first key sequence obtained by the first device;

a generation unit, configured to generate a fourth ranging signal based on the second key sequence; and

a correlation operation unit, configured to perform a correlation operation on the fourth ranging signal and the first signal used for ranging, to obtain a second timestamp, wherein the second timestamp is used to calculate a distance between the first device and the second device.

17. The communication apparatus according to claim 16, wherein the second key sequence comprises a third key subsequence and a fourth key subsequence, and a length of the third key subsequence is equal to a length of the fourth key subsequence; and

the generation unit is specifically configured to generate a fourth ranging sending signal based on the third key subsequence in the second key sequence.

18. The communication apparatus according to claim 17, wherein the transceiver unit is further configured to:
send a second ranging signal, wherein the second ranging signal is generated based on the fourth key subsequence in the second key sequence, and the second ranging signal is used to measure the distance between the first device and the second device.

19. The communication apparatus according to any one of claims 16 to 18, wherein the channel state information is a complex sequence, a real part of the channel state information is used to generate the third key subsequence in the second key sequence, and an imaginary part of the channel state information is used to generate the fourth key subsequence in the second key sequence; and
the length of the third key subsequence is equal to the length of the fourth key subsequence.

20. The communication apparatus according to any one of claims 16 to 19, wherein that the second ranging signal is generated based on the second key sequence comprises:

the second ranging signal is generated after a second ranging sequence is modulated, and the second ranging sequence is obtained after bit-wise XOR is performed on the fourth key subsequence in the second key sequence and an original ranging sequence; or

the second ranging signal is generated after a second ranging sequence is modulated, the second ranging sequence is obtained after advanced encryption standard AES encryption is performed on an original ranging sequence by using the fourth key subsequence in the second key sequence, and a length of the second ranging sequence, the length of the fourth key subsequence, and a length of the original ranging sequence are equal; or

the second ranging signal is generated after the fourth key subsequence in the second key sequence is modulated, wherein

the original ranging sequence is a sequence determined by the first device and the second device through negotiation, or the original ranging sequence is a preset random sequence.

21. A communication apparatus, comprising a processor and a transceiver, wherein the transceiver is configured to send/receive a signal, and when the processor runs program instructions, the communication apparatus is enabled to perform the method according to any one of claims 1 to 10.

22. A computer-readable storage medium, wherein the computer-readable storage medium stores program instructions, and when the program instructions are run on a computer, the computer is enabled to perform the method according to any one of claims 1 to 10.

23. A computer program product comprising program instructions, wherein when the program instructions are run on a computer, the computer is enabled to perform the method according to any one of claims 1 to 10.

Device 1/Device 1

| UWB module | Narrowband communication module |

Device 2/Device 2

| Narrowband communication module | UWB module |

Data transmission

Positioning and/or ranging

FIG. 1

First device          Second device

t1          Ranging signal 1

t2

t3

t4          Ranging signal 2

FIG. 2

EP 4 451 760 A1

```
┌──────────────────────────┐   ┌──────────────────────────┐                ┌──────────────────────────┐
│    phyHrpUwbStsVUpper 96 │   │    phyHrpUwbStsVCounter  │                │      phyHrpUwbStsKey     │
└──────────────────────────┘   └──────────────────────────┘                └──────────────────────────┘
95                         0   31                        0                127                         0
```

Incremented once per 128 bits output →

```
                                  ┌──────────────┐
                                  │ 32-bit counter│
                                  │ 32-bit counter│
                                  └──────────────┘
```

```
┌───────────────────────────────────────────────────────┐
│           128-bit value V/128-bit value V             │
└───────────────────────────────────────────────────────┘
127                                                     0
```

┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
  256-bit seed

```
        ┌──────────────┐                              ┌──────────────┐
        │  128-bit data│                              │ 128-bit STS key│
        │  128-bit data│                              │ 128-bit STS key│
        └──────────────┘                              └──────────────┘
```

└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘

Data/Data                                                    Key/Key

Run once per 128 bits output →

```
┌───────────────────────────────────────────────────────────────────────┐
│                              AES-128                                   │
└───────────────────────────────────────────────────────────────────────┘
```

Run once per 128 bits output:
Run once per 128 bits output
Incremented once per 128 bits output:
Incremented once per 128 bits output

```
        ┌───────────────────────────────────────────────────────────────┐
        │ 128-bit pseudo-random number/128-bit pseudo-random number     │
        └───────────────────────────────────────────────────────────────┘
        127                                                            0
```

Used to from 128 pulse of the STS (MSB first)
Used to from 128 pulse of the STS (MSB first)

phyHrpUwbStsVUpper 96: 96 most significant bits physical high-frequency ultra-wideband scrambling code timestamp sequence V
phyHrpUwbStsVCounter: physical high-frequency ultra-wideband scrambling code timestamp sequence V counter
phyHrpUwbStsKey: physical high-frequency ultra-wideband scrambling code timestamp sequence key

FIG. 3

| First device | | |
|---|---|---|
| | UWB module | Narrowband communication module |

| Second device | | |
|---|---|---|
| | UWB module | Narrowband communication module |

S101: Obtain a first key sequence, where the first key sequence is generated based on channel state information between the narrowband communication module of the first device and the narrowband communication module of the second device

S103: Obtain a second key sequence, where the second key sequence is generated based on the channel state information between the narrowband communication module of the second device and the narrowband communication module of the first device

S102: Send a first ranging signal, where the first ranging signal is generated based on the first key sequence

S104: Receive a first signal used for ranging, where the first signal used for ranging is obtained after the first ranging signal is transmitted through a wireless channel

S105: Generate a fourth ranging signal based on the second key sequence, and perform a correlation operation on the fourth ranging signal and the first signal used for ranging, to obtain a second timestamp

S106: Send a second ranging signal, where the second ranging signal is generated based on a fourth key subsequence in the second key sequence

S107: Receive a second signal used for ranging, where the second signal used for ranging is obtained after the second ranging signal is transmitted through the wireless channel

S108: Generate a third ranging signal based on the second key subsequence, and perform a correlation operation on the third ranging signal and the second signal used for ranging, to obtain a first timestamp

FIG. 4

FIG. 5

Processing unit — 11

Transceiver unit — 12

Communication apparatus 1

FIG. 6

Obtaining unit — 21

Transceiver unit — 22

Generation unit — 23

Correlation operation unit — 24

Communication apparatus 2

FIG. 7

Communication apparatus 1000

Processor — 1001

Instruction

Memory — 1003

Instruction

Transceiver — 1002

Control circuit

Antenna

FIG. 8

## INTERNATIONAL SEARCH REPORT

| International application No. |
|---|
| **PCT/CN2023/071023** |

| A. | CLASSIFICATION OF SUBJECT MATTER |
|---|---|

H04W 64/00(2009.01)i

According to International Patent Classification (IPC) or to both national classification and IPC

| B. | FIELDS SEARCHED |
|---|---|

Minimum documentation searched (classification system followed by classification symbols)

H04W,H04Q

Documentation searched other than minimum documentation to the extent that such documents are included in the fields searched

Electronic data base consulted during the international search (name of data base and, where practicable, search terms used)

CNTXT, CNABS, WPABSC, ENTXTC, ENTXT, VEN, DWPI, IEEE, CNKI: 测距, 测量, 距离, 时间戳, 密钥, 序列, 窄带, 短距离, 蓝牙, 变化, 随机, 信道, 超宽带, 状态, 相等, 相关, 本地, 长度, 异或, 比特, ranging, measurement, distance, timestamp, key, sequence, narrowband, short, Bluetooth, change, random, channel, wideband, state, equal, correlated, local, length, xor, bits, UWB, BT, WIFI, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2019116619 A1 (APPLE INC.) 18 April 2019 (2019-04-18) description, paragraphs [0023]-[0062], and figures 2-8 | 1-23 |
| Y | US 2021345102 A1 (MASSACHUSETTS INSTITUTE OF TECHNOLOGY) 04 November 2021 (2021-11-04) claim 1, and description, paragraphs [0025]-[0068] | 1-23 |
| Y | CN 111095963 A (APPLE INC.) 01 May 2020 (2020-05-01) description, paragraphs [0026]-[0071] | 1-23 |
| A | KR 20220008616 A (SAMSUNG ELECTRONICS CO., LTD.) 21 January 2022 (2022-01-21) entire document | 1-23 |
| A | CN 107076826 A (SZ DJI TECHNOLOGY CO., LTD.) 18 August 2017 (2017-08-18) entire document | 1-23 |

☑ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**EP 4 451 760 A1**

<table>
<tr><td colspan="2" align="center">INTERNATIONAL SEARCH REPORT</td><td>International application No.<br><br>**PCT/CN2023/071023**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | MADISEH, M. G. et al. "Time Correlation Analysis of Secret Key Generation via UWB Channels"<br>*2010 IEEE Global Telecommunications Conference GLOBECOM 2010,*<br>10 January 2011 (2011-01-10),<br>    sections 1-3 | 1-23 |

Form PCT/ISA/210 (second sheet) (July 2022)

**INTERNATIONAL SEARCH REPORT**
**Information on patent family members**

International application No.

**PCT/CN2023/071023**

| Patent document cited in search report | | | Publication date (day/month/year) | Patent family member(s) | | | Publication date (day/month/year) |
|---|---|---|---|---|---|---|---|
| US | 2019116619 | A1 | 18 April 2019 | US | 2022225267 | A1 | 14 July 2022 |
| | | | | AU | 2017250352 | A1 | 11 October 2018 |
| | | | | EP | 3417663 | A2 | 26 December 2018 |
| | | | | KR | 20180123091 | A | 14 November 2018 |
| | | | | WO | 2017181132 | A2 | 19 October 2017 |
| US | 2021345102 | A1 | 04 November 2021 | WO | 2021091615 | A1 | 14 May 2021 |
| CN | 111095963 | A | 01 May 2020 | US | 2020336303 | A1 | 22 October 2020 |
| | | | | US | 2022399994 | A1 | 15 December 2022 |
| | | | | WO | 2019067056 | A1 | 04 April 2019 |
| | | | | EP | 3646628 | A1 | 06 May 2020 |
| KR | 20220008616 | A | 21 January 2022 | WO | 2022014924 | A1 | 20 January 2022 |
| CN | 107076826 | A | 18 August 2017 | WO | 2018090181 | A1 | 24 May 2018 |

Form PCT/ISA/210 (patent family annex) (July 2022)

**EP 4 451 760 A1**

**REFERENCES CITED IN THE DESCRIPTION**

**Patent documents cited in the description**

- CN 202210102063